# EUROPEAN PATENT APPLICATION

(11) **EP 4 831 039 A1**
(43) Date of publication of application: **28.10.2026**
(21) Application number: 26168273.6
(22) Date of filing: 26.03.2026
(51) Int. Cl.: B62D 25/08, B62D 25/20, B62D 29/00, B60N 2/015

(54) **VEHICLE REAR STRUCTURE**

(30) Priority: 22.04.2025 JP 2025070349
(71) Applicant: Toyota Jidosha Kabushiki Kaisha, Toyota-shi, Aichi-ken 471-8571 (JP)
(72) Inventor: YAMAJI, Ken, TOYOTA-SHI, AICHI-KEN, 471-8571 (JP); TOYOSHIMA, Hiroki, KARIYA-SHI, AICHI-KEN, 448-8651 (JP); TSURU, Michinobu, TOYOTA-SHI, AICHI-KEN, 471-8571 (JP)
(74) Representative: Cabinet Beau de Loménie

(57) **Abstract**

A vehicle rear structure (100) includes a rear frame member (10) integrally formed with left and right wheel houses (11L, 11R) and a coupling member (12), and a seat back (15) mounted on the rear frame member (10). In the vehicle rear structure (100), the rear frame member (10) is integrally formed with a plurality of bases (21, 41) having top faces for mounting the seat back (15), and at least one protrusion (25, 26, 45) is arranged adjacent to a corresponding one of the plurality of bases (21, 41).

## Description

### TECHNICAL FIELD

The present disclosure relates to a structure of a vehicle rear portion on which a vehicle interior component is mounted.

### BACKGROUND

A vehicle interior component, such as a rear seat, is mounted on a rear portion of a vehicle. JP 2011-161937 A discloses a rear seat which is attached to a floor panel and a rear cross member via a bracket.

During installation of a rear seat, positioning of the rear seat onto a vehicle body is performed using a jig, such as a positioning pin, with reference to a hole formed in a region of the vehicle body. However, positioning cannot be easily performed with a conventional method in a vehicle using a rear frame member in which left and right wheel houses are integrally molded as has been studied in recent years.

In light of these circumstances, the present disclosure is directed to improving the ease of mounting a vehicle interior component on an integrally molded rear frame member.

### SUMMARY

A vehicle rear structure according to the present disclosure includes an integrally formed rear frame member including left and right wheel houses and a coupling member for coupling the left and right wheel houses in a vehicle width direction, and a vehicle interior component mounted on the rear frame member, in which the rear frame member is further integrally formed with a plurality of bases on which the vehicle interior component is mounted, and at least one protrusion placed adjacent to a corresponding base of the plurality of bases.

When the protrusion is integrally formed as described above at a location adjacent to the base on which the vehicle interior component is mounted, positioning of the vehicle interior component relative to the rear frame member can be performed with respect to the protrusion. In this manner, the vehicle interior component can be easily mounted on the integrally formed rear frame member.

In the vehicle rear structure according to this disclosure, the at least one protrusion may protrude upwardly further than the top face of the corresponding base.

When configured in this manner, the vehicle interior component can be placed in position on the rear frame member with respect to the protrusion.

In the vehicle rear structure according to this disclosure, the vehicle interior component may include a plurality of brackets which are respectively mounted on the top faces of the plurality of bases, the at least one protrusion may include a first protrusion and a second protrusion, the first protrusion may be arranged forward of and adjacent to a corresponding base of the plurality of bases and configured to define a longitudinal position of a corresponding bracket of the plurality of brackets when the corresponding bracket is placed on the top face of the corresponding base, and the second protrusion may be arranged adjacent to and outward, in the vehicle width direction, of the corresponding base and configured to define a position of the corresponding bracket in the vehicle width direction when the corresponding bracket is placed on the top face of the corresponding base.

This can facilitate positioning of the vehicle interior component relative to the rear frame member in the longitudinal direction and in the vehicle width direction.

In the vehicle rear structure according to this disclosure, the at least one protrusion may have a guiding face that is inclined obliquely downward toward the corresponding base, to guide the corresponding bracket to the corresponding base.

In this way, the bracket is guided to the top face of the base by the guiding face in a process of attaching the vehicle interior component to the bases, which can improve ease in mounting the vehicle interior component on the rear frame member.

In the vehicle rear structure disclosed herein, the at least one protrusion may include a first protrusion and a second protrusion, the first protrusion may be arranged forward of and adjacent to a corresponding base of the plurality of bases and have a first positioning face configured to contact a front portion of the corresponding bracket when the corresponding bracket is placed on the top face of the corresponding base, and the second protrusion may be arranged adjacent to and outward, in the vehicle width direction, of the corresponding base, and have a first positioning face configured to contact a vehicle width direction outer side of the corresponding bracket when the corresponding bracket is placed on the top face of the corresponding base.

When configured in this manner, the corresponding bracket can be appropriately positioned in the longitudinal direction relative to the corresponding base by bringing the front portion of the corresponding bracket in contact with the first positioning face of the first protrusion placed forward of the corresponding base. Further, the corresponding bracket can be appropriately positioned in the vehicle width direction relative to the corresponding base by bringing the vehicle width direction outer side of the corresponding bracket in contact with another first positioning face of the second protrusion placed outward, in the vehicle width direction, of the corresponding base.

In the vehicle rear structure disclosed herein, the first protrusion may have a first guiding face connected to the first positioning face, and the first guiding face may be inclined obliquely downward toward the corresponding base, to guide the corresponding bracket to the corresponding base when the front portion of the corresponding bracket contacts the first guiding face. Further, in the vehicle structure, the second protrusion may have another first guiding face connected to the other first positioning face, and the other first guiding face may be inclined obliquely downward toward the corresponding base, to guide the corresponding bracket to the corresponding base when the vehicle width direction outer side of the corresponding bracket contacts the other first guiding face.

In this manner, the corresponding bracket can be guided to the top of the corresponding base along the first guiding face, and the front portion of the bracket can be brought into contact with the first positioning face to place the corresponding bracket in position. Further, the corresponding bracket can be guided to the top of the corresponding base along the other first guiding face, and the vehicle width direction outer side of the bracket can be brought into contact with the other first positioning face to place the corresponding bracket in position.

In the vehicle rear structure disclosed herein, the at least one protrusion may include a center protrusion, the plurality of brackets may include a center bracket, the center bracket may have, at a front end or a vehicle width direction outer end, a recess into which the center protrusion is inserted; and the center protrusion may include a second positioning face configured to contact a bottom face of the recess when the center bracket is placed on the top face of a corresponding base of the plurality of bases.

In this manner, positions of the vehicle interior component can be simultaneously set both in the longitudinal direction and in the vehicle direction relative to the rear frame member. Further, the number of protrusions and the number of brackets can be reduced.

In the vehicle rear structure disclosed herein, the center protrusion may have a second guiding face connected to the second positioning face, and the second guiding face may be inclined obliquely downward toward the corresponding base, to guide the center bracket to the corresponding base when the second guiding face contacts the bottom face of the recess.

When configured in this manner, the center bracket can be guided to the top of the corresponding base along the second guiding face, and placed in position by bringing the bottom face of the recess in the center bracket into contact with the second positioning face. In addition, the center bracket can be guided to the top face of the base while maintaining the center bracket at a predetermined position relative to the corresponding base in the vehicle width direction or in the vehicle longitudinal direction.

In the vehicle rear structure disclosed herein, the recess of the center bracket may be formed in a trapezoidal shape having a width which decreases toward the bottom face.

In this way, positioning of the center bracket relative to the base can be easily achieved in the vehicle width direction or the vehicle longitudinal direction only be fitting the protrusion into the recess.

In the vehicle rear structure disclosed herein, each of top faces of the plurality of bases may be an inclined face which is downward inclined toward a vehicle front region.

Also in a case where the top face of the base integrally molded with the rear frame member is inclined, positioning of the vehicle interior component can be easily achieved relative to the rear frame member in the vehicle longitudinal direction or the vehicle width direction.

In the vehicle rear structure disclosed herein, the plurality of bases may include an outer base placed on a corresponding one of the wheel houses, the at least one protrusion may include a first outer protrusion and a second outer protrusion which are arranged adjacent to the outer base, the plurality of brackets may include an outer bracket attached to a top face of the outer base, the top face of the outer base may be an inclined face which is downwardly inclined toward the vehicle front region, the first outer protrusion may be arranged forward of and adjacent to the outer base so as to stand on a top face of a corresponding one of the wheel houses and have the first positioning face and the first guiding face, and the second outer protrusion may be arranged adjacent to and outward, in the vehicle width direction, of the outer base so as to stand on the top face of the corresponding one of the wheel houses and have the other first positioning face and the other first guiding face.

This configuration enables installing the bracket at a predetermined position on the wheel house.

In the vehicle rear structure disclosed herein, the plurality of bases may include a center base disposed on the coupling member, the at least one protrusion may include a center protrusion arranged adjacent to the center base, the plurality of brackets may include a center bracket attached to a top face of the center base, the top face of the center base may be an inclined surface which is inclined downwardly toward the vehicle front region, the center protrusion may be adjacently arranged forward of the center base so as to stand on a front portion of the coupling member, and the center bracket may have, at a front end, the recess into which the center protrusion is inserted.

In this manner, positioning of the vehicle interior component relative to the rear frame member can be achieved simultaneously in the longitudinal direction and the vehicle width direction by means of the center protrusion and the center bracket.

In the vehicle rear structure disclosed herein, the front end of the center bracket may extend from a lower end of the vehicle interior component along an obliquely downward direction toward the vehicle front region.

With this configuration, the protrusion and the recess defined at the front end of the center bracket can be visually observed during assembly of the vehicle interior component, which can facilitate positioning the vehicle interior component onto the rear frame member.

The present disclosure provides an advantageous effect that the vehicle interior component can be easily mounted on the integrally molded rear frame member.

### BRIEF DESCRIPTION OF DRAWINGS

Embodiments of the present disclosure will be described based on the following figures, wherein:
FIG. 1 is an exploded perspective view of a vehicle rear structure according to a first embodiment;
FIG. 2 is a schematic diagram showing a layout of brackets for fixing a seat back of a rear seat in the vehicle rear structure shown in FIG. 1, and bases and protrusions disposed on a rear frame member;
FIG. 3 is a detailed perspective view showing a configuration of an outer bracket shown in part A of FIG. 1 on the left of the seat back in the vehicle rear structure shown in FIG. 1, and outer bases and outer protrusions shown in part B of FIG. 1 on a left wheel house in the vehicle rear structure shown in FIG. 1;
FIG. 4 is a perspective view showing a state wherein the outer bracket shown in FIG. 3 is placed on the top faces of the outer bases;
FIG. 5 is a cross-sectional view showing the outer bracket, the outer base, and outer protrusions shown in FIG. 4, taken along a line E-E indicated in FIG. 4;
FIG. 6 is a diagram for explaining a process to place the outer bracket shown in FIG. 3 on the top face of the outer base and showing a state where the outer bracket is positioned above the outer base;
FIG. 7 is a diagram for explaining the process to place the outer bracket shown in FIG. 3 on the top face of the outer base and showing a state where the outer bracket is guided to the outer base with a front portion of the outer bracket being in contact with first guiding faces of the outer protrusions;
FIG. 8 is a diagram for explaining the process to place the outer bracket shown in FIG. 3 on the top face of the outer base and showing a state where the front portion of the outer bracket is in contact with first positioning faces of the outer protrusions;
FIG. 9 is a detailed perspective view showing a center bracket shown in part D of FIG. 1 disposed on the seat back in the vehicle rear structure shown in FIG. 1 along with a center base and a center protrusion on the coupling member shown in part C of FIG. 1;
FIG. 10 is a perspective view showing a state where the center bracket shown in FIG. 9 is placed on the top face of the center base;
FIG. 11 is a cross-sectional view of the center bracket, the center base, and the center protrusion shown in FIG. 9, taken along a line F-F indicated in FIG. 10;
FIG. 12 is a diagram for explaining a process to place the center bracket shown in FIG. 9 on the top face of the center base and showing a state where the center bracket is placed above the center base;
FIG. 13 is a diagram for explaining the process to place the center bracket shown in FIG. 9 on the top face of the center base and showing a state where the center protrusion is partially inserted into a recess in the center bracket;
FIG. 14 is a diagram for explaining the process to place the center bracket shown in FIG. 9 on the top face of the center base and showing a state where the bottom of the recess in the center bracket is brought into contact with a second guiding face of the center protrusion;
FIG. 15 is a diagram for explaining the process to place the center bracket shown in FIG. 9 on the top face of the center base, showing a state where the bottom of the recess in the center bracket is brought into contact with a second positioning face of the center protrusion by sliding the bottom of the recess in the center bracket on the second guiding face of the center protrusion to guide the center bracket to the center base;
FIG. 16 is a diagram showing a modification example of the center bracket;
FIG. 17 is an elevation view of a modified example of the center protrusion;
FIG. 18 is a cross-sectional view taken along a line G-G indicated in FIG. 17;
FIG. 19 is a diagram showing another modification example of the center protrusion;
FIG. 20 is a schematic diagram showing a layout of brackets for fixing the seat back of the rear seat in the vehicle rear structure according to a second embodiment, and bases and protrusions disposed on the rear frame member;
FIG. 21 is a schematic diagram showing a layout of brackets for fixing the seat back of the rear seat in the vehicle rear structure according to a third embodiment, and bases and protrusions disposed on the rear frame member;
FIG. 22 is a schematic diagram showing a layout of brackets for fixing the seat back of the rear seat in the vehicle rear structure according to a fourth embodiment, and bases and protrusions disposed on the rear frame member;
FIG. 23 is a schematic diagram showing a layout of brackets for fixing the seat back of the rear seat in the vehicle rear structure according to a fifth embodiment, and bases and protrusions disposed on the rear frame member; and
FIG. 24 is a schematic diagram showing a layout of brackets for fixing the seat back of the rear seat in the vehicle rear structure according to a sixth embodiment, and bases and protrusions disposed on the rear frame member.

### DESCRIPTION OF EMBODIMENTS

Hereinafter, a vehicle rear structure 100 according to a first embodiment will be explained with reference to the drawings. In the drawings, reference labels FR, UP, and RH respectively indicate a front side, an upper side, and a right-hand side of the vehicle rear structure 100. Further, directions opposite to FR, UP, and RH respectively indicate a rear side, a lower side, and a left-hand side of the vehicle rear structure 100. Hereinafter, the terms longitudinal, lateral, and vertical directions used for explanation represent longitudinal, lateral, and vertical directions of the vehicle rear structure 100 unless otherwise specified.

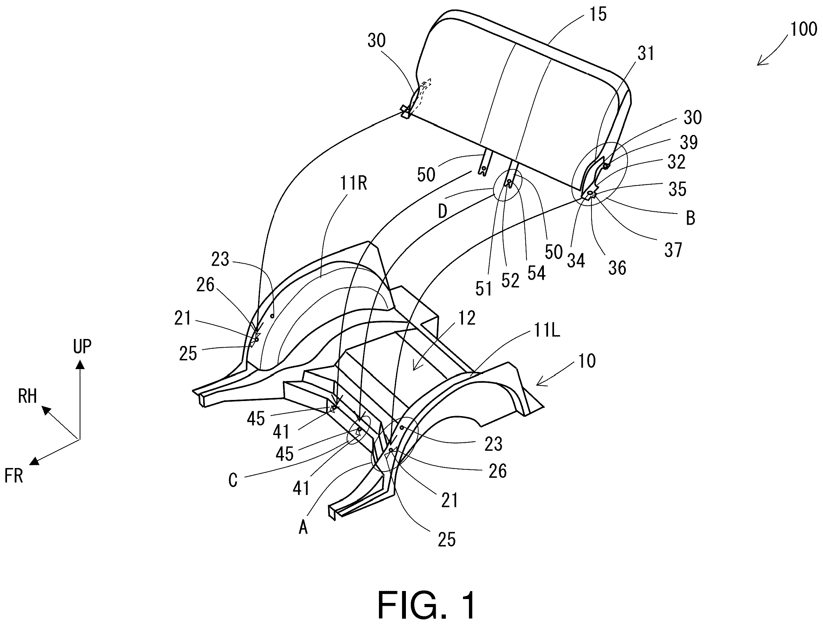

As shown in FIG. 1, the vehicle rear structure 100 includes a rear frame member 10, and a seat back 15 of a vehicle back seat. The seat back 15 is configured to support the back of a passenger seated on the vehicle back seat, and is a vehicle interior component mounted on the rear frame member 10.

The rear frame member 10 is an integrally molded die-cast member formed of a metal, such as aluminum, and including left and right wheel houses 11L, 11R and a coupling member 12. The rear frame member 10 constitutes a rear body of a vehicle. The left and right wheel houses 11L, 11R are respectively designed to internally accommodate left and right rear wheels. The coupling member 12 is configured to connect between the left and right wheel houses 11L, 11R in a vehicle width direction, i.e., a left-and-right direction.

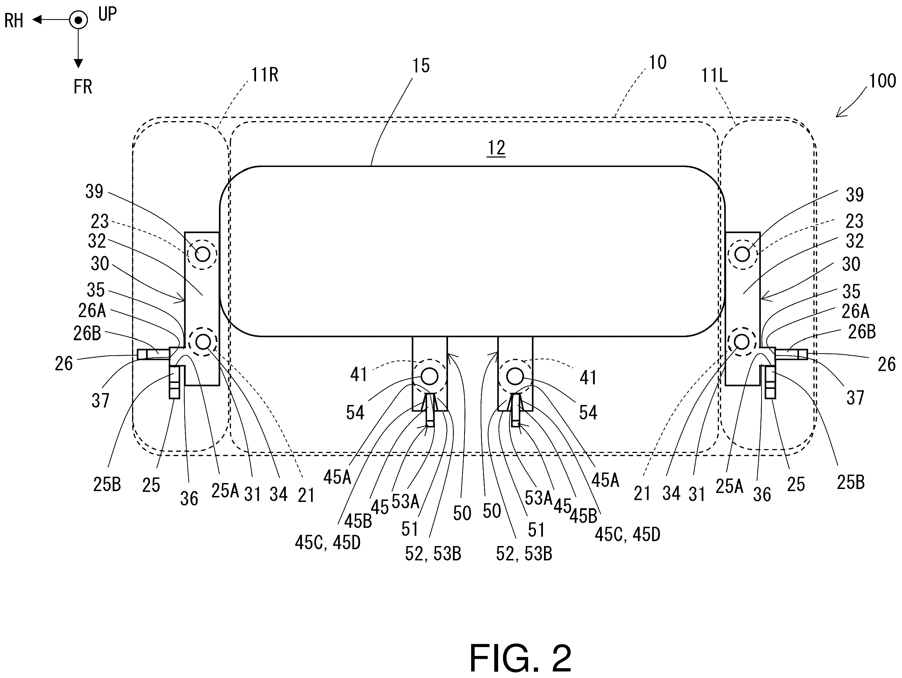

As shown in FIGs. 1 and 2, a front portion of the left wheel house 11L includes outer bases 21, 23; a front outer protrusion 25; and a lateral outer protrusion 26 disposed on a front part of the left wheel house 11L. Further, a center base 41 and a center protrusion 45 are placed at a position slightly shifted leftward from the center, in the vehicle width direction, of the coupling member 12. Similarly, a front portion of the right wheel house 11R also includes outer bases 21, 23, a front outer protrusion 25, and a lateral outer protrusion 26, while a center base 41 and a center protrusion 45 are provided at a position slightly shifted rightward from the center of the coupling member 12 in the vehicle width direction. The outer bases 21, 23, the front outer protrusions 25, the lateral outer protrusions 26, the center bases 41, and the center protrusions 45 on the left and right are integrally molded with the wheel houses 11L, 11R and the coupling member 12. Here, each of the outer bases 21 on the left and right is a base in the plurality of bases that corresponds to both the front outer protrusion 25 and the lateral outer protrusion 26. Further, the center base 41 is a base in the plurality of bases that corresponds to the center protrusion 45. A configuration of the outer bases 21, 23, the front outer protrusion 25, the lateral outer protrusion 26, the center base 41, and the center protrusion 45 located on the left will be described below. An arrangement of the outer bases 21, 23, the front outer protrusion 25, the lateral outer protrusion 26, the center base 41, and the center protrusion 45 located on the right is symmetrically identical to the arrangement of the outer bases 21, 23, the forward outer protrusion 25, the lateral outer protrusion 26, the center base 41, and the center protrusion 45 located on the left, and description related to the arrangement on the right is not repeated.

The seat back 15 includes outer brackets 30 which are attached to respective left and right side faces of the seat back 15. Center brackets 50 are also attached to the seat back 15 at positions slightly shifted leftward and rightward respectively from the center of the seat back 15 in the vehicle width direction. The center brackets 50 are plate members extending from the lower end of the seat back 15 toward a vehicle front region along an obliquely downward direction. Here, the outer brackets 30 on the left and right are brackets in the plurality of brackets that respectively correspond to the outer bases 21 on the left and right. Further, the center bracket 50 corresponds to the center base 41. Hereinafter, the outer bracket 30 and the center bracket 50 on the left are explained. The outer bracket 30 and the center bracket 50 on the right are symmetrically identical to the left outer bracket 30 and the left center bracket 50, and are not explained below.

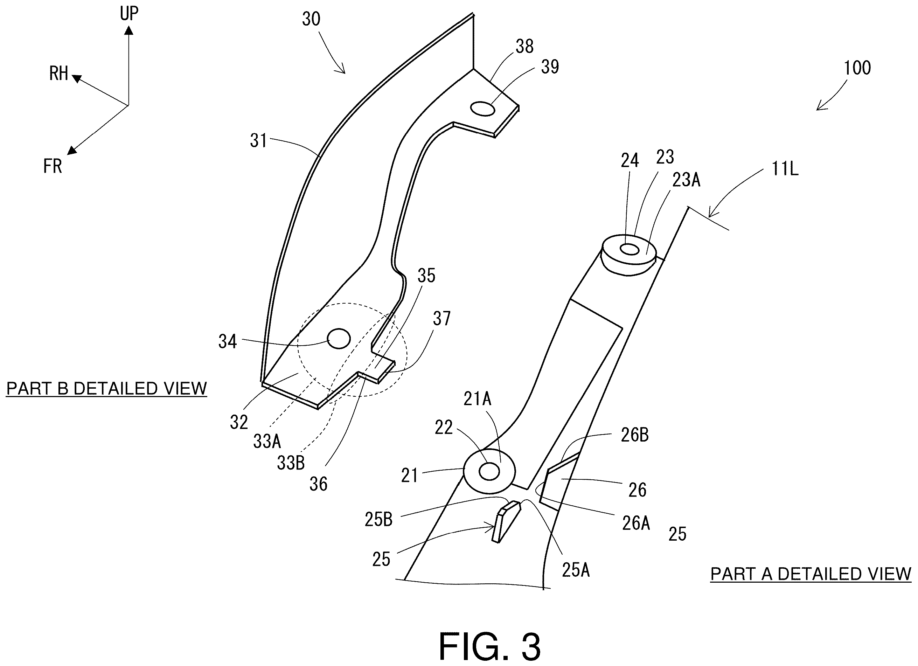

The outer bases 21, 23, the front outer protrusion 25, the lateral outer protrusion 26 located on the left are explained below. As shown in FIG. 3, the left outer base 21 is placed on a front portion of the left wheel house 11L that is inclined obliquely downward toward a vehicle front region. The outer base 21 is a columnar part which slightly protrudes from the surface of the wheel house 11L. A top face 21A of the outer base 21 is an inclined face which inclines obliquely downward toward the front region. The top face 21A is a machined surface. The top face 21A has, at its center, a bolt hole 22 into which a bolt for fixing the outer bracket 30 is screwed.

The front outer protrusion 25 is arranged at a left front position relative to the outer base 21. In addition, the lateral outer protrusion 26 is arranged on a vehicle width direction outer side, or a left side of the outer base 21.

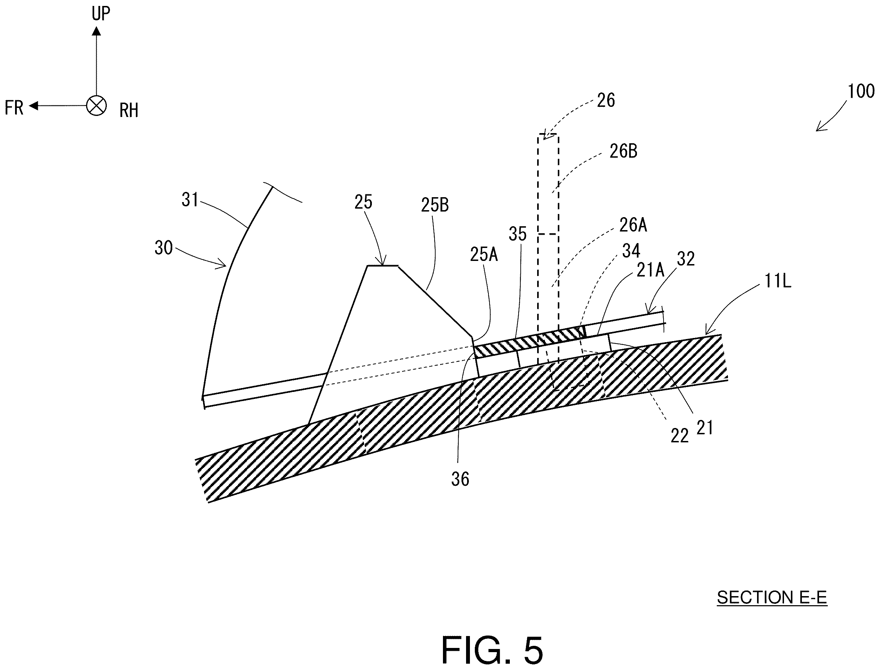

As shown in FIGs. 3 and 5, the front outer protrusion 25 is a plate-shaped part extending along the vehicle longitudinal direction and arranged to stand on the top face of the wheel house 11L. The front outer protrusion 25 has a first, front positioning face 25A and a first, front guiding face 25B. The first front positioning face 25A is the rear end face of the front outer protrusion 25 and extends along a direction perpendicular to the top face 21A of the outer base 21. The first front guiding face 25B is an end face, on the front side, of the front outer protrusion 25 connected to the first front positioning face 25, and extends obliquely upwardly from the upper end of the first front positioning face 25A toward the front region. The first front positioning face 25A may be formed as a machined surface in order to enhance positioning accuracy. The first front guiding face 25B may or may not be machined.

The lateral outer protrusion 26 is a plate-shaped part extending in the vehicle width direction, or lateral direction, and arranged to stand on the top face of the wheel house 11L. The lateral outer protrusion 26 has a first, side positioning face 26A and a first, side guiding face 26B. The first side positioning face 26A is a vehicle width direction inner end face or right end face of the lateral outer protrusion 26, and extends along a direction perpendicular to the top face 21A of the outer base 21. The first side guiding face 26B is a vehicle width direction inner, or right end, face of the lateral outer protrusion 26 that is connected to the first side positioning face 26A and extends obliquely upward from the top end of the first side positioning face 26A toward the left. The first side positioning face 26A may be formed as a machined face in order to enhance positioning accuracy. The first side guiding face 26B may or may not be machined.

The outer base 23 is placed rearward from the outer base 21 and is a column-shaped part which protrudes slightly from the surface of the wheel house 11L. The outer base 23 has, at its center, a bolt hole 24. A top face 23A of the outer base 23 is a substantially horizontal surface. The top face 23A is a machined surface. No protrusion is arranged around the outer base 23.

As shown in FIG. 3, the left outer bracket 30 is an L-shaped, folded plate member composed of a metal and includes a vertical flange 31 and a lateral flange 32. The vertical flange 31 is fixed to the left side face of the seat back 15, for example, by means of a bolt which is not illustrated. A front portion 33A of the lateral flange 32 has a bolt hole 34 and a lip 35. The lip 35 is arranged at a position slightly forward the bolt hole 34, and designed to protrude from a vehicle width direction outer end portion 33B, or a left end portion of the lateral flange 32, toward the left. The lip 35 has a front end face 36 and a left end face 37. Another bolt hole 39 is defined in a rear portion 38 of the lateral flange 32.

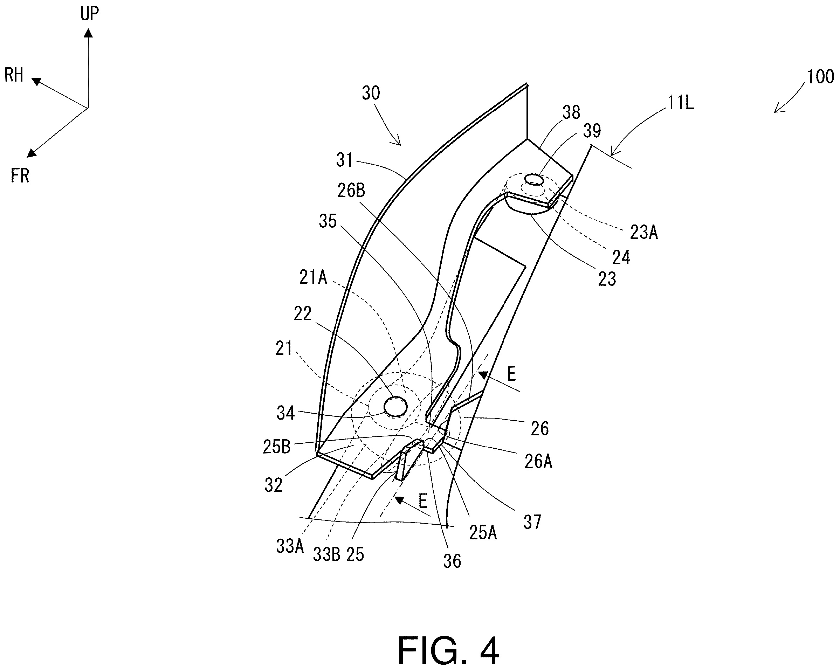

FIGs. 4 and 5 show a state wherein the outer bracket 30 is placed on the outer bases 21, 23 to mount the seat back 15 on the rear frame member 10. As shown in FIGs. 4 and 5, the front region 33A of the outer bracket 30 is placed on the outer base 21, and the front end face 36 of the lip 35 is brought into contact with the first front positioning face 25A of the front outer protrusion 25, which restricts the longitudinal position of the outer bracket 30 relative to the outer base 21. Then, the left end face 37 of the lip 35 is brought into contact with the first side positioning face 26A of the lateral outer protrusion 26, which restricts the lateral position of the outer bracket 30.

Here, the top face 21A of the outer base 21 is an inclined face that inclines obliquely downward toward the front region. As such, bringing both the front end face 36 and the left end face 37 of the lip 35 into contact with the first front positioning face 25A and the first side positioning face 26A when the seat back is suspended can in some cases be difficult. In such cases, the outer bracket 30 can be placed in position in the vehicle rear structure 100 using the first front guiding face 25B and the first side guiding face 26B, as will be explained below.

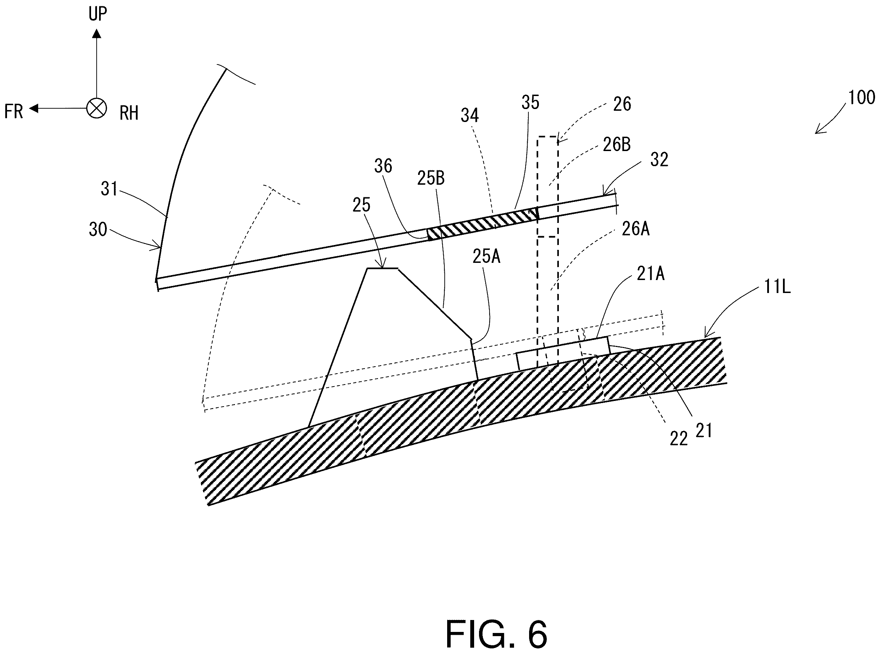

First, as shown in FIG. 6, the outer bracket 30 is placed above the outer base 21 while the seat back 15 is being suspended.

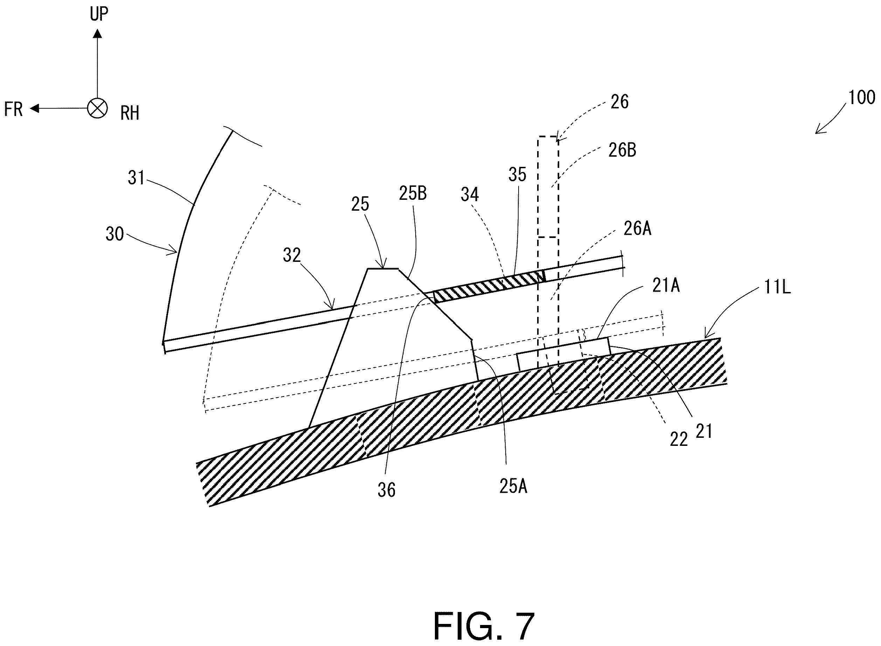

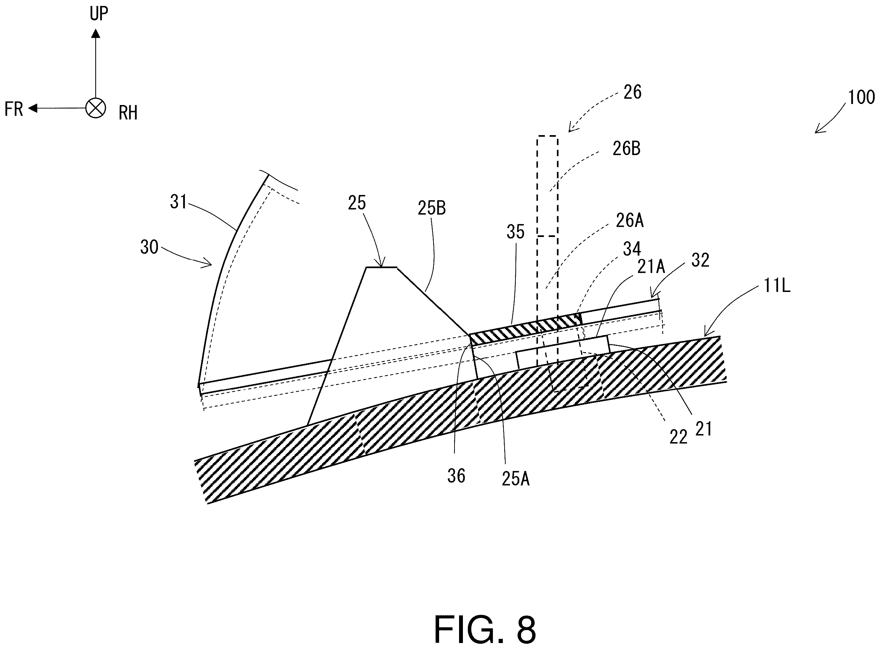

Second, as shown in FIG. 7, the seat back 15 is lowered so as to bring the front end face 36 of the lip 35 into contact with the first front guiding face 25B. Then, while the front end face 36 of the lip 35 is guided by the first forward guiding face 25B, the front portion 33A of the outer bracket 30 moves toward the outer base 21 when the seat back 15 is lowered. When the seat back 15 is lowered further, as shown in FIG. 8, the front end face 36 of the lip 35 moves to meet the first front positioning face 25A while being in contact with the first front guiding face 25B. Then, as shown with broken lines in FIG. 6, when the outer bracket 30 is placed to rest on the top face 21A of the outer base 21, the front end face 36 of the lip 35 in the vehicle width direction of the outer end portion 33B makes contact with the first front positioning face 25A, which enables the longitudinal position of the outer bracket 30 to be set at a predetermined position relative to the base 21.

While the seat back 15 is similarly lowered with the left end face 37 of the lip 35 being in contact with the first side guiding face 26B, the left end face 37 moves from its position abutting against the first side guiding face 26B to a position abutting against the first side positioning face 26A. In this way, the left end face 37 of the lip 35 can be brought into full contact with the first side positioning face 26A, to place the outer bracket 30 in an appropriate position relative to the outer base 21 in the lateral direction.

As described above, when the seat back 15 is mounted on the rear frame member 10 in the vehicle rear structure 100, the outer bracket 30 can be guided to the top face 21A of the outer base 21 using the first front guiding face 25B and the first side guiding face 26B. This can secure ease in mounting the seat back 15 on the rear frame member 10.

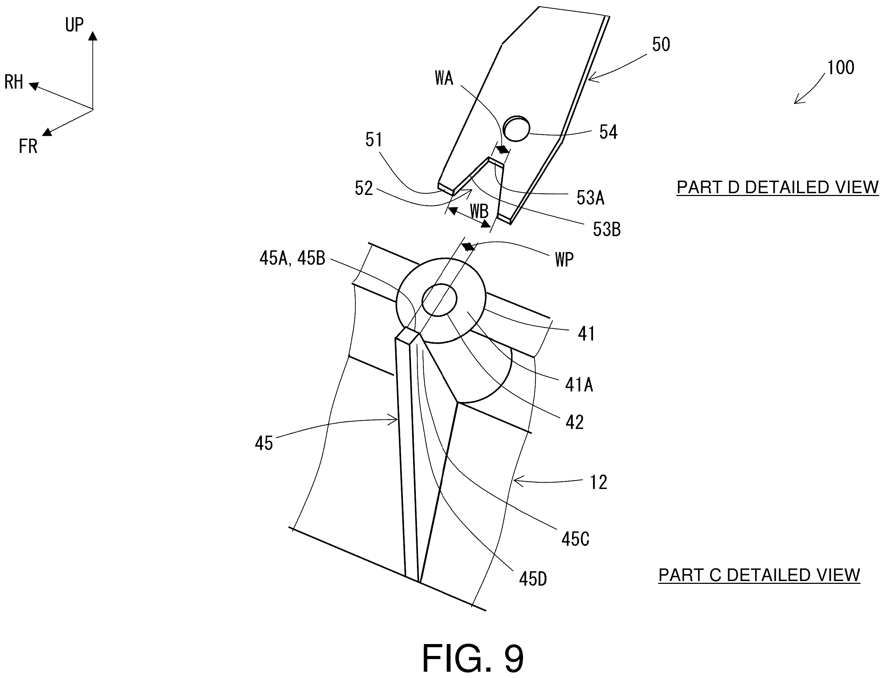

Next, the center base 41 and the center protrusion 45 on the left will be explained. As shown in FIGs. 1 and 9, the center protrusion 45 on the left is placed on a front lower portion of the coupling member 12 where the coupling member 12 is downwardly inclined toward the front region. The center base 41 is a column-shaped part protruding from the surface of the coupling member 12. A top face 41A of the center base 41 is an inclined face inclining downwardly toward the front region. The top face 41A is a machined surface. The top face 41A has, at the center, a bolt hole 42 in which a bolt is screwed to attach the center bracket 50.

The center protrusion 45 is formed at a position forward the center base 41. The center protrusion 45 is a plate member extending the vehicle longitudinal direction and having a thickness WP, and arranged to stand on the top face of the coupling member 12. The center protrusion 45 has a second, front positioning face 45A, a second, front guiding face 45B, second, side positioning faces 45C, and second, side guiding faces 45D.

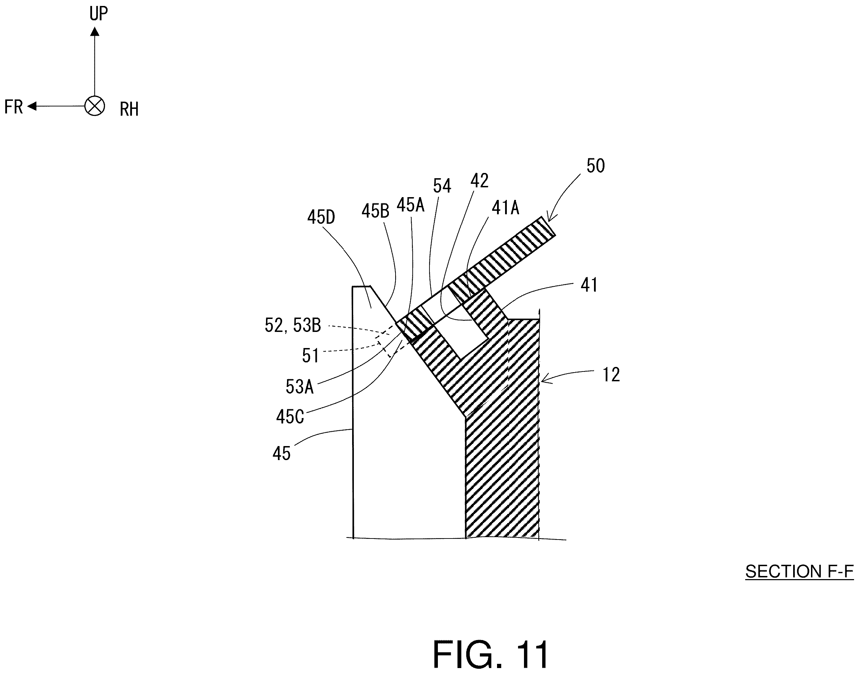

As shown in FIG. 11, the second front positioning face 45A is a rear end face of the center protrusion 45 and extends in a direction perpendicular to the top face 41A of the center base 41. The second front guiding face 45B is coplanar with the second front positioning face 45A and located upward the second front positioning face 45A. The second front guiding face 45B is connected to the second front positioning face 45A.

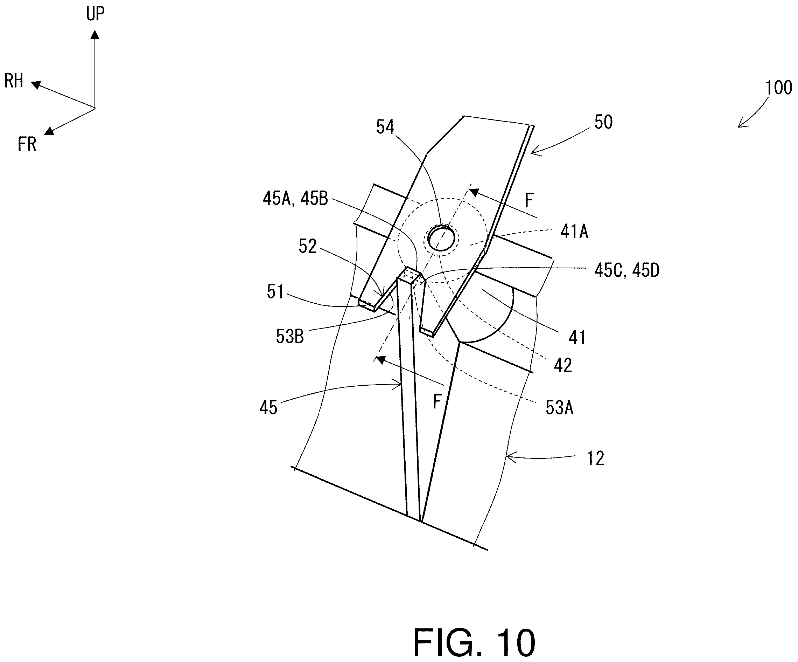

As shown in FIGs. 9 and 10, the second side positioning faces 45C are left and right side faces of the center protrusion 45 and are located in a region corresponding to the second front positioning face 45A. As in the case of the second side positioning faces 45C, the second side guiding faces 45D are left and right side faces of the center protrusion 45 and are located in a region corresponding to the second front guiding face 45B. The second side guiding faces 45B are respectively connected to the second side positioning faces 45C and located upward the second side positioning faces 45C.

The second front positioning face 45A, the second front guiding face 45B, the second side positioning faces 45C, and the second side guiding faces 45 may be machined surfaces.

As shown in FIG. 9, the center bracket 50 is a belt-shaped plate member attached to a lower portion of the seat back 15, and extends obliquely downward toward the vehicle front region from the lower end of the seat back 15 to a front end 51. The front end 51 includes a recess 52. The recess 52 has left and right side faces 53B and a bottom face 53A. The recess 52 is formed in the shape of a trapezoid having a width narrowing from the front end 51 toward the bottom face 53A. A width WA of the bottom face 53A of the recess 52 is equal to the thickness WP of the center protrusion 45, and a width WB of the recess 52 at the front end 51 is greater than the width WA of the bottom face 53A or the thickness WP of the center protrusion 45.

FIGs. 10 and 11 show the center bracket 50 placed on the center base 41 in a process to mount the seat back 15 on the rear frame member 10. As shown in FIGs. 10 and 11, after the center bracket 50 is rested on the center base 41, the bottom face 53A of the recess 52 is brought into contact with the second front positioning face 45A of the center protrusion 45, which defines the longitudinal position of the center bracket 50 relative to the center base 41. Further, because the width WA of the bottom face 53A of the recess 52 matches the thickness WP of the center protrusion 45, when the bottom face 53A is brought into contact with the second front positioning face 45A, the left and right side faces 53B of the recess 52 respectively contact the left and right second side positioning faces 45C of the center protrusion 45, which defines the lateral position of the center bracket 50.

Here, the top face 41A of the center base 42 is an inclined face inclining obliquely downward toward the front region. As such, bringing the bottom face 53A and the side faces 53B of the recess 52 in the center bracket 50 into contact with the second front positioning face 45 and the second side positioning face 45C when the seat back 15 is suspended may be difficult. In such a case, the second front guiding face 45B and the second side guiding face 45D can be used to perform positioning of the center bracket 50 in the vehicle rear structure 100, as explained below.

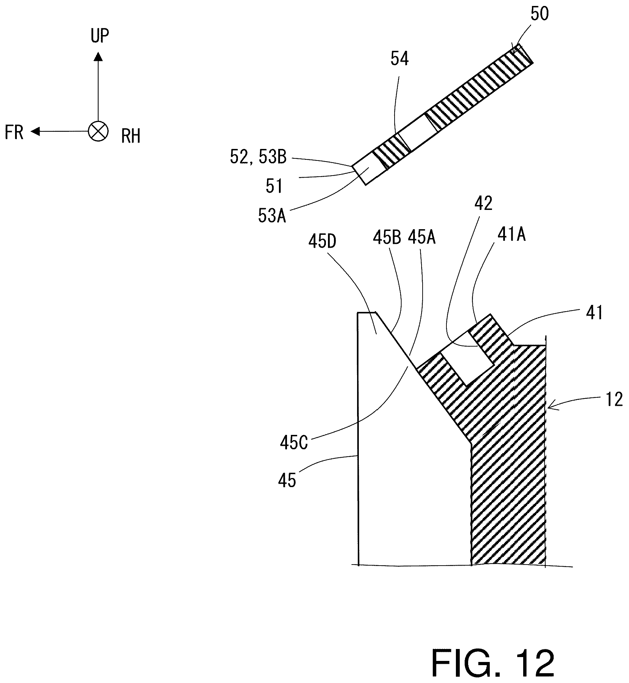

First, as shown in FIG. 12, the center bracket 50 is placed above the center base 41 in a state where the seat back 15 is suspended.

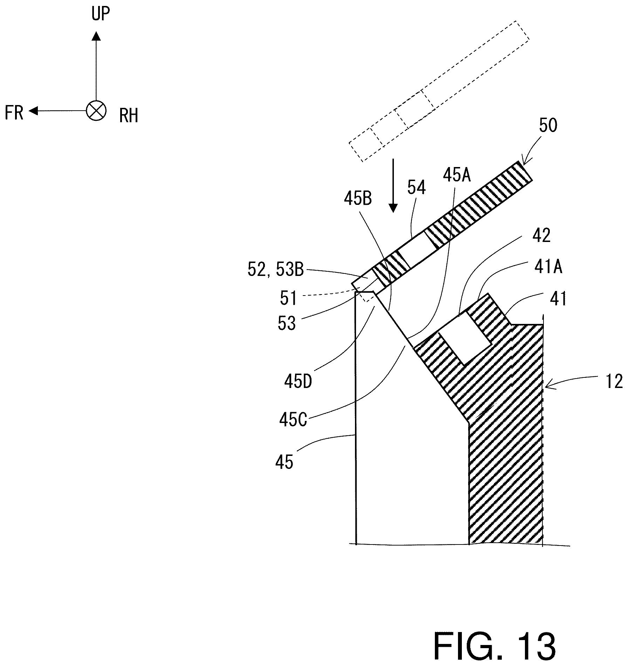

Second, as indicated by an arrow shown in FIG. 13, the seat back 15 is lowered, so as to insert a part of the center protrusion 45 into the recess 52 of the center bracket 50. In this state, there is a gap between the bottom face 53A of the recess 52 and the second front guiding face 45B. Similarly, there is a gap between the side face 53B of the recess 52 and the second side guiding face 45 on either side of the bottom face 53A.

Then, as the seat back 15 is lowered a little further, the gap between the bottom face 53A of the recess 52 and the second front guiding face 45B and the gap between the side face 53B of the recess 52 and the second side guiding face 45D on each of the left and right sides of the bottom face 53A are gradually decreased. The recess 52 in the center bracket 50 is formed in the trapezoidal shape having the width which decreases toward the bottom face 53A. Therefore, after the center protrusion 45 enters the recess 52, one of the left and right side faces 53B of the recess 52 is brought into contact with a corresponding one of the second side guiding faces 45D, and guided by the corresponding one of the second side guiding faces 45D, which causes the center bracket 50 to laterally move toward a predetermined installation position. Then, as the seat back 15 is lowered further, the gaps between the bottom face 53A of the recess 52 and the second front guiding face 45B and between the side face 53B of the recess 52 and the second side guiding face 45D on each of the left and right sides further decrease, while the center bracket 50 laterally moves to a predetermined installation position.

The bottom face 53A of the recess 52 is brought into contact with the second front guiding face 45B by further lowering the seat back 15. As described above, because the width WA of the bottom face 53A of the recess 52 is equal to the thickness WP of the center protrusion 45, the contact between the bottom face 53A and the second front guiding face 45B causes the left and right side faces 53 of the recess 52 to respectively contact the left and right second side guiding faces 45D. This sets the position of the center bracket 50 in the vehicle width direction relative to the center base 41.

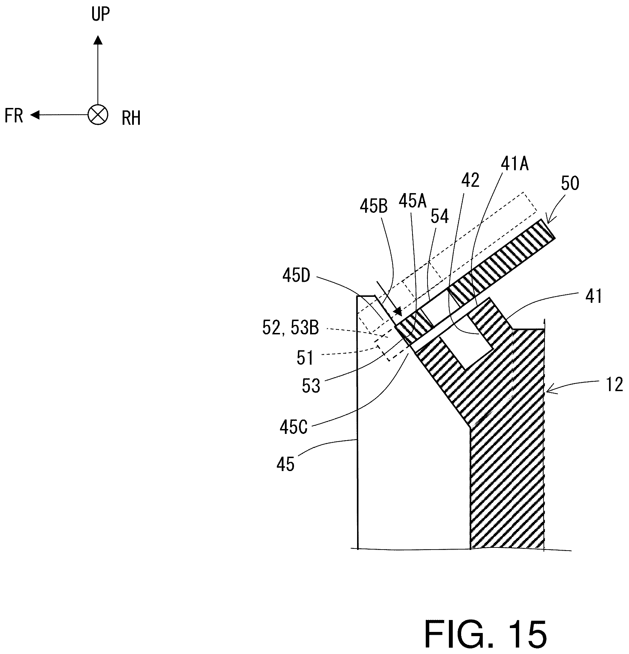

Subsequently, while the seat back 15 is being lowered further, the bottom face 53A of the recess 52 moves obliquely downward on the second front guiding face 45B, as indicated by an arrow in FIG. 15, toward the top face 41A of the center base 41. During the movement, the left and right side faces 53B of the recess 52 are respectively guided by the left and right second side guiding faces 45D. In this manner, the center bracket 50 moves to the top face 41A of the center base 41 while being retained at a predetermined position in the vehicle width direction or at a predetermined lateral position relative to the center base 41.

When the center bracket 50 rests on the top face 41A of the center base 41 as shown in FIG. 11, the bottom face 53A of the recess 52 comes into contact with the second front positioning face 45A, which sets the longitudinal position of the center bracket 50 at a predetermined position relative to the center base 41. Further, because both of the left and right side faces 53B of the recess 52 respectively contact the left and right second side positioning faces 45C, the position of the center bracket 50 in the left and right direction is also set to a predetermined position relative to the center base 41.

As described above, according to the vehicle rear structure 100, when the bottom face 53A of the recess 52 is brought into contact with the second front guiding face 45B in a process of mounting the seat back 15 on the rear frame member 10, the side faces 53B on the left and right sides of the recess 52 respectively contact the left and right second side guiding faces 45D, which sets a lateral position of the center bracket 50 at the predetermined position. Subsequently, the bottom face 53A of the recess 52 is brought into contact with the second front guiding face 45B, to move the center bracket 50 to the top face 41A of the center base 41. In this manner, the center bracket 50 can be guided onto the top face 41A of the center base 41 while maintaining the lateral position of the center bracket 50 at the predetermined position.

In addition, when the bottom face 53A of the recess 52 contacts the second front positioning face 45A, the left and right side faces 53B respectively contact with the left and right second side positioning faces 45C, which can allow positioning of the center bracket 50 to be simultaneously achieved in both the longitudinal direction and the left and right direction.

In the vehicle rear structure 100, the front end 51 of the center bracket 50 extends from the lower end of the seat back 15 toward the vehicle front region along an obliquely downward direction, and the recess 52 is defined in the front end 51. As such, when the seat back 15 is installed in the rear frame member 10, both the center protrusion 45 and the recess 52 can be easily observed visually, which facilitates positioning the seat back 15 relative to the rear frame member 10.

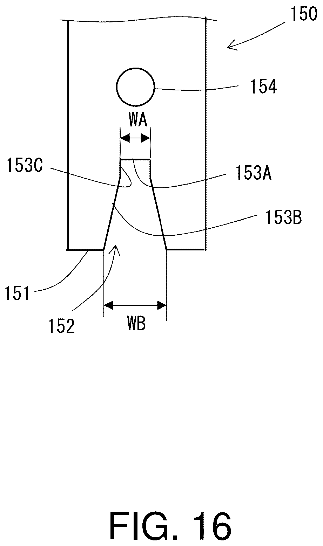

Next, an example modification of the center bracket 50 will be explained with reference to FIG. 16. As shown in FIG. 16, in a center bracket 150 according to this modified example, a recess 152 has a bottom face 153A, left and right side faces 153B, and left and right parallel faces 153C. The distance between the left and right parallel faces 153C is equal to the width WA of the bottom face 153A.

In the center bracket 150 of the modification example, because the left and right parallel faces 153C are respectively brought into intimate contact with the left and right second side positioning surface 45C and the left and right second side guiding face 45D of the center protrusion 45, positioning strength becomes greater in the vehicle width direction, or the lateral direction. This can ensure that the seat back 15 is retained at a predetermined position in the vehicle width direction, or the lateral direction.

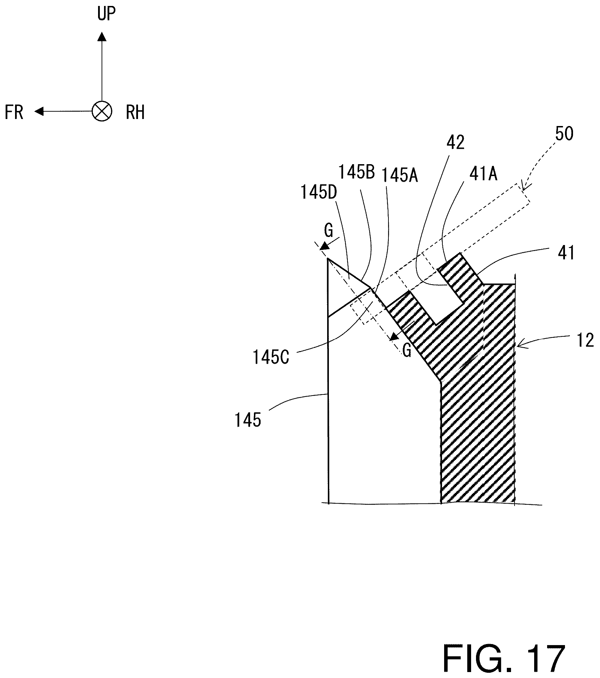

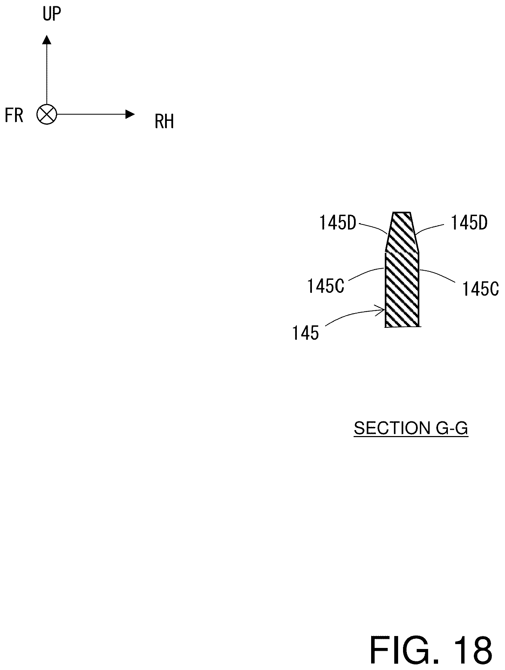

Hereinafter, an example modification of the center protrusion 45 will be explained with reference to FIGs. 17 and 18. The above-described center protrusion 45 has the second front guiding face 45B which is flush with the second front positioning face 45A, while a center protrusion 145 according to the modification example has a second front guiding face 145B which is connected to a second front positioning face 145A and inclines from the second front positioning face 145A toward the front region; i.e., the inclination of the second front guiding face 145B is less steep than the inclination of the second front positioning face 145A. Further, as shown in FIG. 18, a portion of the center protrusion 145 where the second side guide surfaces 145D are present is formed in a tapered shape in which the thickness of the center protrusion 145 decreases toward the top. In this manner, the second front positioning face 145A functioning to set the final longitudinal position of the center bracket 50 and the second side positioning faces 145C functioning to set the final lateral position of the center bracket 50 are formed as machined surfaces, while the second front guiding face 145B and the second side guiding faces 145D may not be machined, which can decrease the number of machining processes.

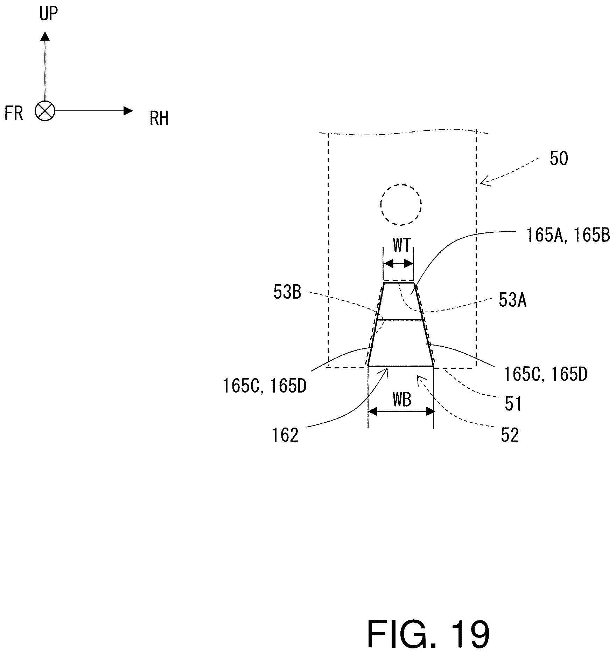

Next, referring to FIG. 19, another example modification of the center protrusion 45 will be explained. As shown in FIG. 19, a center protrusion 165 in the other modification example has a trapezoidal shape having a thickness that thins toward a vehicle rear region. The rear end width of the center protrusion 165 is equal to the width WA of the bottom face 53A of the recess 52 in the center bracket 50 described with reference to FIG. 9, the depth of the center protrusion 165 is equal to the depth of the recess 52, and the width of a front end 162 of the center protrusion 165 is equal to the width WB, at the front end 51, of the recess 52. In this way, the left and right side faces 53B of the center bracket 50 are respectively brought into intimate contact with the left and right second side positioning faces 165C and with the left and right second side guiding faces 165D, which can increase the positioning strength in the vehicle width direction, or in the lateral direction. Accordingly, the seat back 15 can be reliably placed at the predetermined position in the vehicle width direction, or the lateral direction.

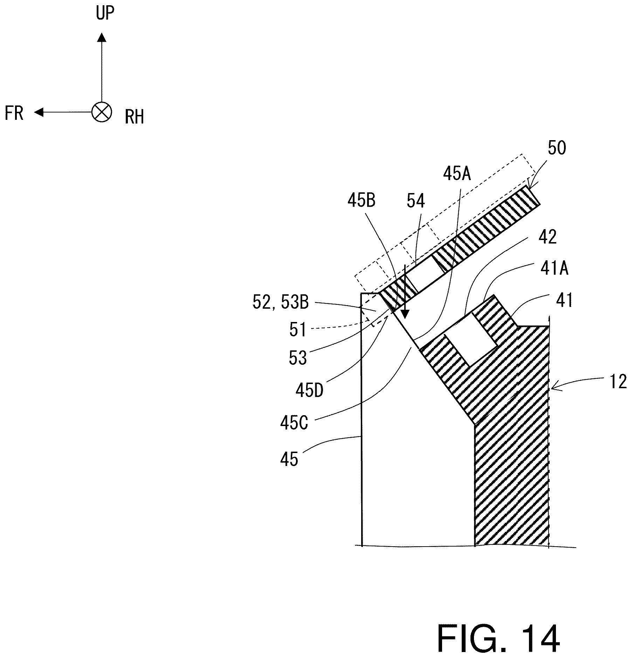

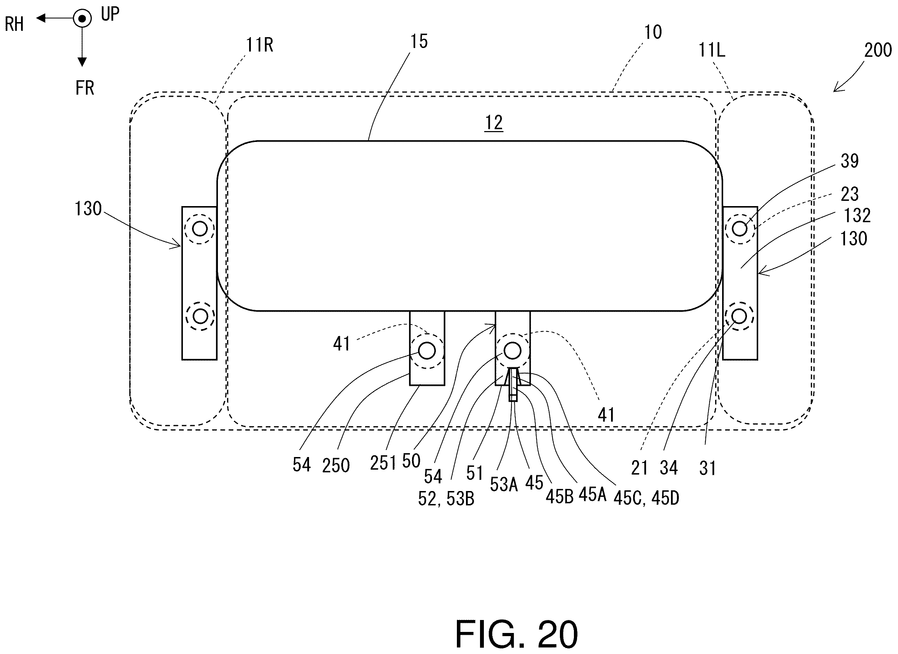

Hereinafter, vehicle rear structures 200, 300, 400, 500, and 600 will be respectively explained according to Embodiments 2 to 6 with reference to FIGs. 20 to 24. The same components as those of the vehicle rear structure 100 according to the first embodiment previously described with reference to FIGs. 1 to 15 are designated by the same reference signs as those of the vehicle rear structure 100, and description related to those components will not be repeated.

The vehicle rear structure 200 according to an Embodiment 2 shown in FIG. 20 includes left and right outer brackets 130, the left center bracket 50, the left center protrusion 45, and a right center bracket 250. The left and right front outer protrusions 25, the lateral outer protrusions 26, and the right center protrusion 45 are not contained in the vehicle rear structure 200. Lateral flanges of the left and right outer brackets 130 lack the lips 35, and the right center bracket 250 has no recess 52 at a front end 251. Other configurations of the vehicle rear structure 200 are identical to those of the vehicle rear structure 100.

The vehicle rear structure 200 is configured to place the seat back 15 in position both in the longitudinal direction and in the lateral direction by means of the left center bracket 50 and the center protrusion 45. In the vehicle rear structure 200, the number of protrusions integrally formed with the rear frame member 10 can be reduced to one, which can simplify the overall structure.

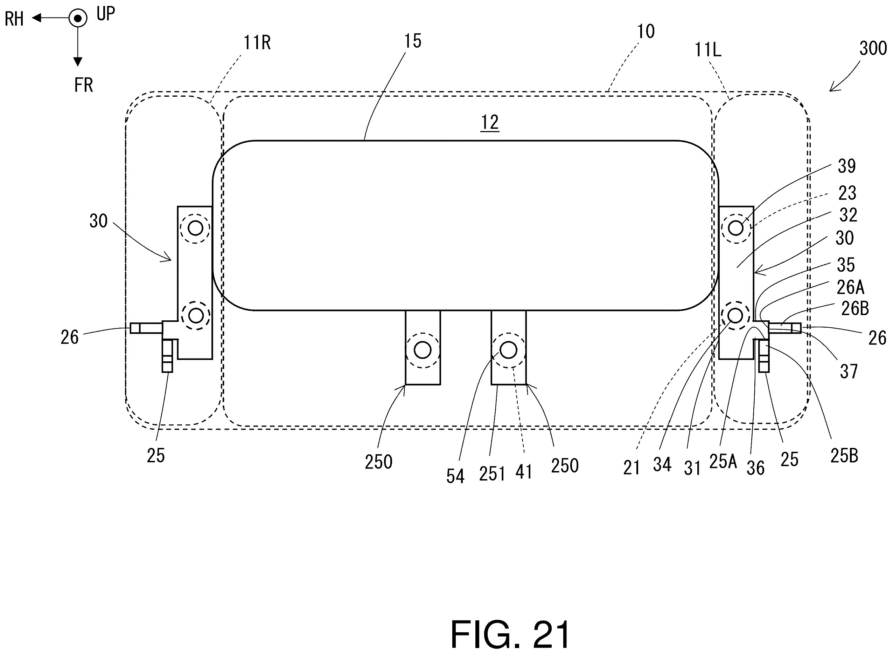

The vehicle rear structure 300 according to an Embodiment 3 shown in FIG. 21 lacks the left and right center protrusions 45, and the left and right center brackets 250 have no recess 52 at their front ends 251. Other configurations of the vehicle rear structure 300 are identical to those of the vehicle rear structure 100. In the vehicle rear structure 300, the number of protrusions integrally formed with the rear frame member 10 can be reduced, and the structure is accordingly simplified as in the case of the vehicle rear structure 200.

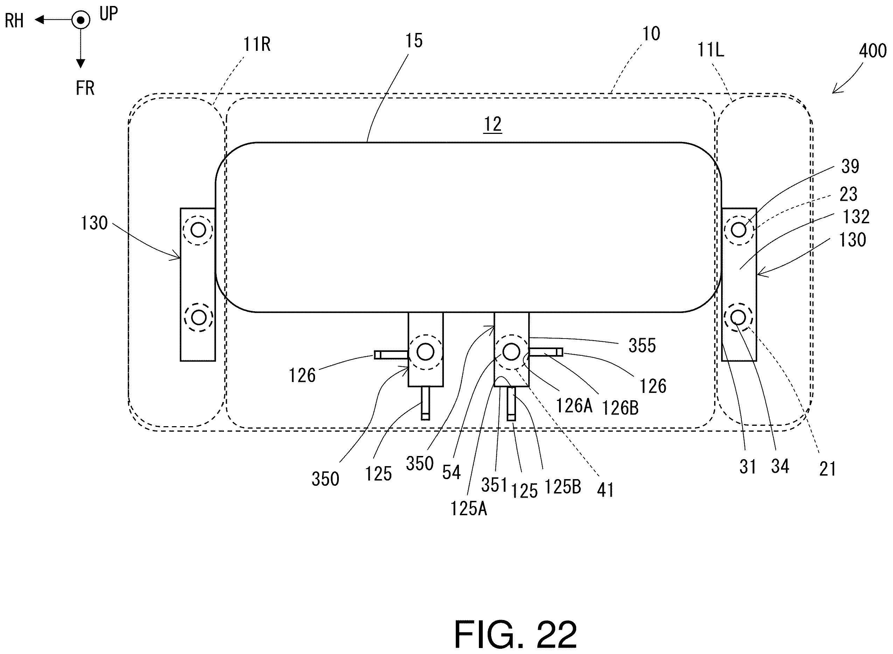

As shown in FIG. 22, the vehicle rear structure 400 according to Embodiment 4 includes, on the coupling member 12, a front center protrusion 125 forward of each of the left and right center bases 41 and a lateral center protrusion 126 lateral outside of each of the left and right center bases 41. The front center protrusion 125 on the left side has a third front positioning face 125A and a third front guiding face 125B. The lateral center protrusion 126 on the left side has a third side positioning face 126A and a third side guiding face 126B. The third front positioning face 125A is configured to contact a front end 351 of a center bracket 350, and the third side positioning face 126A is configured to contact a left side end 355 of the center bracket 350. The front center protrusion 125 and the lateral center protrusion 126 are configured in the same manner as the front outer protrusion 25 and the lateral outer protrusion 26 in the vehicle rear structure 100, respectively. Configurations of the front center protrusion 125 and the lateral center protrusion 126 on the right side are symmetrically identical to those of the front center protrusion 125 and the lateral center protrusion 126 on the left side.

In the vehicle rear structure 400, the number of protrusions integrally formed with the rear frame member 10 can be reduced, leading to simplification of the structure as in the case of the vehicle rear structure 200.

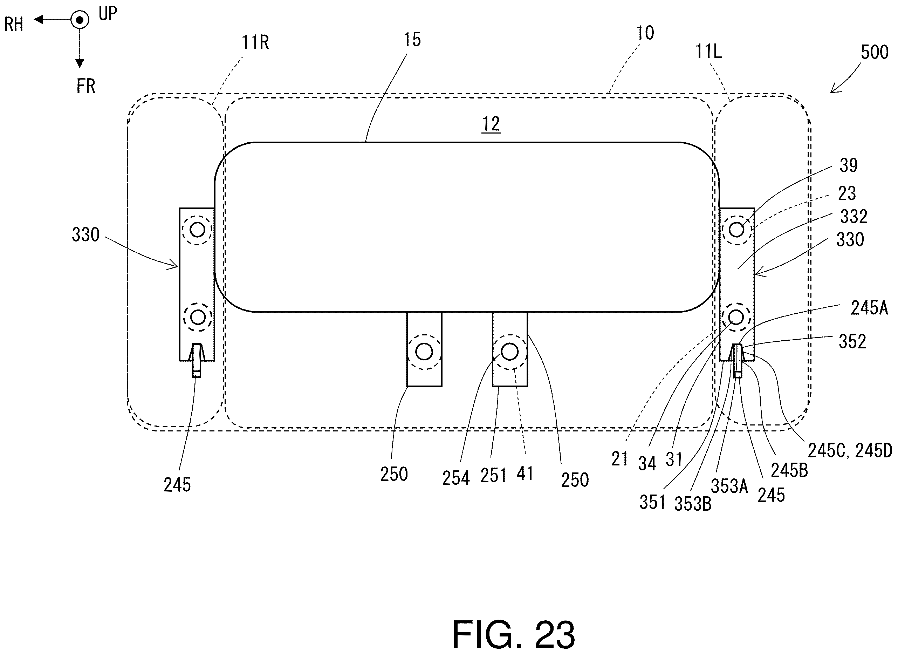

The vehicle rear structure 500 according to an Embodiment 5 shown in FIG. 23 includes left and right outer brackets 330, and left and right outer protrusions 245 being respectively disposed so as to stand on top faces of the left and right wheel houses 11L, 11R. The left outer bracket 330 has a recess 352 having the trapezoidal shape and defined in a front end 351 of a lateral flange 332. The recess 352 has a bottom face 353A and left and right side faces 353B. The left outer protrusion 245 has a fourth front positioning face 245A, a fourth front guiding face 245B, fourth side positioning faces 245C, and fourth side guiding faces 245D. The bottom face 353A of the recess 352 is configured to contact the fourth front positioning face 245A and the fourth font guiding face 245B. Each of the left and right side faces 353B is configured to contact the fourth side positioning face 245C and the fourth side guiding face 245D on a corresponding left or right side. The outer protrusion 245 is configured in the same manner as the center protrusion 45 of the vehicle rear structure 100. The right outer bracket 330 and the right outer protrusion 245 are symmetrically identical to the left outer bracket 330 and the left outer protrusion 245.

Similarly with the vehicle rear structure 200, in the vehicle rear structure 500, the number of protrusions integrally formed with the rear frame member 10 can be reduced, leading to simplification of the structure.

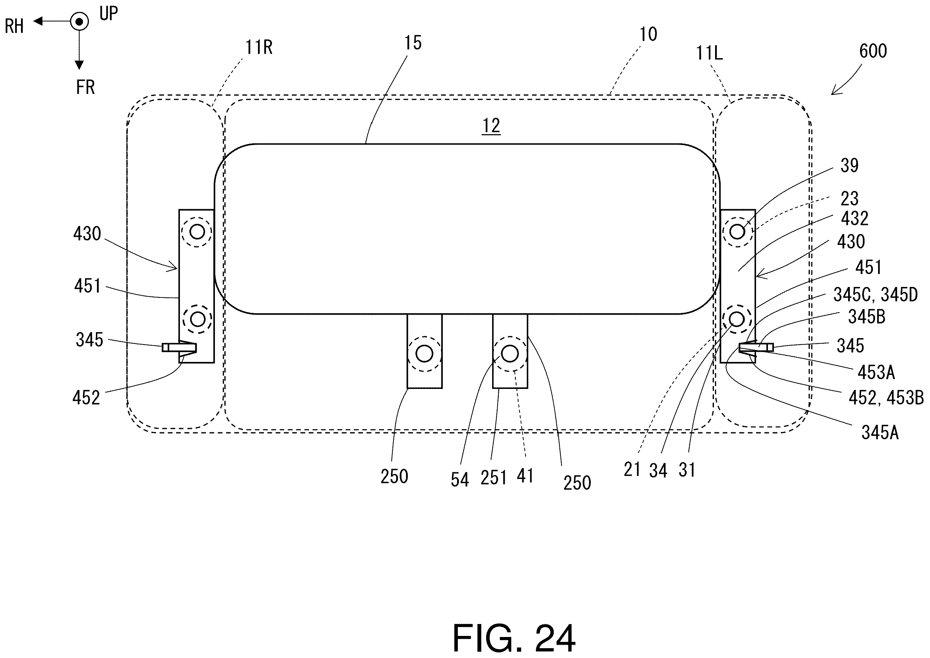

The vehicle rear structure 600 according to Embodiment 6 shown in FIG. 24 includes left and right outer brackets 430 and left and right outer protrusions 345 being respectively disposed so as to stand on top faces of the left and right wheel houses 11L, 11R. The left outer bracket 430 has a recess 452 having the trapezoidal shape and defined in a vehicle width direction outer end, or a left end 451 of a left lateral flange 432. The recess 452 has a bottom face 453A and front and rear side faces 453B. The left outer protrusion 345 includes a fifth side positioning face 345A, a fifth side guiding face 345B, fifth front and rear positioning faces 345C, and fifth front and rear guiding faces 345D. The bottom face 435A of the recess 452 is configured to contact the fifth side positioning face 345A and the fifth side guiding face 35B. Each of the front and rear side faces 453B is configured to contact both the fifth positioning face 345C and the fifth guiding face 345D on a corresponding front or rear side. The outer protrusion 345 is configured in the same manner as the center protrusion 45 of the vehicle rear structure 100. The right outer bracket 430 and the right outer protrusion 345 are symmetrically identical to the left outer bracket 430 and the left outer protrusion 345.

Similarly with the vehicle rear structure 200, in the vehicle rear structure 600, the number of protrusions integrally formed with the rear frame member 10 can be reduced, leading to the simplified structure.

Although in the above description, the structure of this disclosure has been explained with reference to a case wherein the seat back 15 is an example of the vehicle interior component mounted on the rear frame member 10, the structure may be applied to other cases wherein vehicle interior components other than the seat back 15 are mounted on the rear frame member 10, for example, when a vehicle trunk member or a vehicle trim is attached to the coupling member 12.

Further, while the front outer protrusion 25, the lateral outer protrusion 26, the center protrusion 45 have been explained as being formed in the shape of a plate in the above description, those protrusions are not limited to a plate shape, and may, for example, be formed of a round rod having machined positioning and guiding faces. In addition, while the positioning faces are essential features of the front outer protrusion 25, the lateral outer protrusion 26, and the center protrusion 45, the protrusions 25, 26, 45 may not necessarily have guiding faces.

Still further, while it has been described that the outer bases 21, 23 protrude from the top faces of the left and right wheel houses 11L, 11R, and the center base 41 protrudes from the face of the coupling member 12, these bases may be flush with corresponding faces of the left and right wheel houses 11L, 11R, or the coupling member 12.

Moreover, while it has been described above that the seat back 15 is configured to be mounted on the outer bases 21, 23 and the center base 41 via the outer brackets 30 attached to the side faces of the seat back 15 and the center bracket 50 attached to the lower part of the seat back 15, this description is not limiting and other configurations may be employed. For example, fixation arms may be attached to the seat back 15, and the seat back 15 may be mounted on the outer bases 21, 23, and the center base 41 using the fixation arms. In this case, the lip 35 or the recess 52 may be provided to the fixation arm.

## Claims

1. A vehicle rear structure (100) comprising:
an integrally formed rear frame member (10) comprising left and right wheel houses (11L, 11R) and a coupling member (12) which couples the left and right wheel houses (11L, 11R) in a vehicle width direction; and
a vehicle interior component (15) mounted on the rear frame member (10), wherein
the rear frame member (10) is further integrally formed with a plurality of bases (21, 41) on which the vehicle interior component (15) is mounted, and at least one protrusion (25, 26, 45) placed adjacent to a corresponding base of the plurality of bases (21, 41).

2. The vehicle structure (100) according to claim 1, wherein
the at least one protrusion (25, 26, 45) protrudes upwardly further than a top face (21A, 41A) of the corresponding base of the plurality of bases (21, 41).

3. The vehicle structure (100) according to claim 1 or 2, wherein
the vehicle interior component (15) includes a plurality of brackets (30, 50) which are respectively mounted on top faces (21A, 41A) of the plurality of bases (21, 41);
the at least one protrusion (25, 26, 45) comprises a first protrusion (25, 45) and a second protrusion (26);
the first protrusion (25, 45) is arranged forward of and adjacent to a corresponding base of the plurality of bases (21, 41) and configured to define a longitudinal position of a corresponding bracket of the plurality of brackets (30, 50) when the corresponding bracket (30, 50) is placed on the top face (21A, 41A) of the corresponding base (21, 41); and
the second protrusion (26) is arranged adjacent to and outward, in the vehicle width direction, of the corresponding base (21) and configured to define a position of the corresponding bracket (30) in the vehicle width direction when the corresponding bracket (30) is placed on the top face (21A) of the corresponding base (21).

4. The vehicle rear structure (100) according to claim 3, wherein
the at least one protrusion (25, 26, 45) has a guiding face (25B, 26B, 45B) that is inclined obliquely downwardly toward the corresponding base (21, 41) to guide the corresponding bracket (30, 50) to the corresponding base (21, 41).

5. The vehicle rear structure (100) according to claim 3, wherein
the at least one protrusion (25, 26) comprises a first protrusion (25) and a second protrusion (26);
the first protrusion (25) is arranged forward of and adjacent to a corresponding base (21) of the plurality of bases (21, 41), and has a first positioning face (25A) configured to contact a front portion of the corresponding bracket (30) when the corresponding bracket (30) is placed on the top face (21A) of the corresponding base (21); and
the second protrusion (26) is arranged adjacent to and outward, in the vehicle width direction, of the corresponding base (21), and has another first positioning face (26A) configured to contact a vehicle width direction outer side of the corresponding bracket (30) when the corresponding bracket (30) is placed on the top face (21A) of the corresponding base (21).

6. The vehicle rear structure (100) according to claim 5, wherein
the first protrusion (25) comprises a first guiding face (25B) connected to the first positioning face (25A), the first guiding face (25B) being inclined obliquely downward toward the corresponding base (21), to guide the corresponding bracket (30) to the corresponding base (21) when the front portion of the corresponding bracket (30) contacts the first guiding face (25B); and
the second protrusion (26) comprises another first guiding face (26B) connected to the other first positioning face (26A), the other first guiding face (26B) being inclined obliquely downward toward the corresponding base (21), to guide the corresponding bracket (30) to the corresponding base (21) when the vehicle width direction outer side of the corresponding bracket (30) contacts the other first guiding face (26B).

7. The vehicle rear structure (100) according to claim 3, wherein
the at least one protrusion (25, 26, 45) comprises a center protrusion (45);
the plurality of brackets (30, 50) comprises a center bracket (50);
the center bracket (50) has, at a front end or a vehicle width direction outer end, a recess (52) into which the center protrusion (45) is inserted; and
the center protrusion (45) includes a second positioning face (45A) configured to contact a bottom face (53A) of the recess (52) when the center bracket (50) is placed on the top face (41A) of a corresponding base (41) of the plurality of bases (21, 41).

8. The vehicle rear structure (100) according to claim 7, wherein
the center protrusion (45) has a second guiding face (45B) connected to the second positioning face (45A); and
the second guiding face (45B) is inclined obliquely downward toward the corresponding base (41), to guide the center bracket (50) to the corresponding base (41) when the second guiding face (45B) contacts the bottom face (53A) of the recess (52).

9. The vehicle rear structure (100) according to claim 7 or 8, wherein
the recess (52) of the center bracket (50) is formed in a trapezoidal shape having a width which decreases toward the bottom face (53A).

10. The vehicle rear structure (100) according to any one of claims 1 to 9, wherein
each of top faces (21A, 41A) of the plurality of bases (21, 41) is an inclined face which is downwardly inclined toward a vehicle front region.

11. The vehicle rear structure (100) according to claim 6, wherein
the plurality of bases (21, 41) comprises an outer base (21) placed on a corresponding one of the wheel houses (11L, 11R);
the at least one protrusion (25, 26, 45) comprises a first outer protrusion (25) and a second outer protrusion (26) which are arranged adjacent to the outer base (21);
the plurality of brackets (30, 50) comprises an outer bracket (30) attached to a top face (21A) of the outer base (21);
the top face (21A) of the outer base (21) is an inclined face which is downwardly inclined toward a vehicle front region;
the first outer protrusion (25) is arranged forward of and adjacent to the outer base (21) so as to stand on a top face of a corresponding one of the wheel houses (11L, 11R), and comprises the first positioning face (25A) and the first guiding face (25B); and
the second outer protrusion (26) is arranged adjacent to and outward, in the vehicle width direction, of the outer base (21) so as to stand on the top face of the corresponding one of the wheel houses (11L, 11R), and comprises the other first positioning face (26A) and the other first guiding face (26B).

12. The vehicle rear structure (100) according to claim 9, wherein
the plurality of bases (21, 41) comprises a center base (41) disposed on the coupling member (12);
the at least one protrusion (25, 26, 45) comprises a center protrusion (45) arranged adjacent to the center base (41);
the plurality of brackets (30, 50) comprises a center bracket (50) attached to a top face (41A) of the center base (41);
the top face (41A) of the center base (41) is an inclined surface which is downwardly inclined toward a vehicle front region;
the center protrusion (45) is arranged forward of and adjacent to the center base (41) so as to stand on a front portion of the coupling member (12), and comprises the second guiding face (45B) and the second positioning face (45A); and
the center bracket (50) has, at the front end, the recess (52) into which the center protrusion (45) is inserted.

13. The vehicle rear structure (100) according to claim 12, wherein
the front end of the center bracket (50) extends from a lower end of the vehicle interior component (15) along an obliquely downward direction toward the vehicle front region.
